(19) Europäisches Patentamt
European Patent Office
Office européen des brevets

(11) **EP 3 186 846 B1**

(12) **FASCICULE DE BREVET EUROPEEN**

(45) Date de publication et mention de la délivrance du brevet:
**11.03.2020   Bulletin 2020/11**

(21) Numéro de dépôt: **15754212.7**

(22) Date de dépôt: **25.08.2015**

(51) Int Cl.:
*H01M 4/131* *(2010.01)*          *H01M 4/1391* *(2010.01)*
*H01M 4/485* *(2010.01)*          *H01M 4/505* *(2010.01)*
*H01M 4/62* *(2006.01)*            *H01M 10/0525* *(2010.01)*
*H01M 4/02* *(2006.01)*

(86) Numéro de dépôt international:
**PCT/EP2015/069468**

(87) Numéro de publication internationale:
**WO 2016/030389 (03.03.2016 Gazette 2016/09)**

(54) **BATTERIE COMPRENANT UN MATERIAU POUR ÉLECTRODE NÉGATIVE ADHERANT AU COLLECTEUR DE COURANT ANODIQUE**

BATTERIE MIT EINEM NEGATIVELEKTRODENMATERIAL, DAS AM ANODENSTROMKOLLEKTOR ANHAFTET

BATTERY INCLUDING A NEGATIVE ELECTRODE MATERIAL WHICH ADHERES TO THE ANODE CURRENT COLLECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **25.08.2014   FR 1457973**

(43) Date de publication de la demande:
**05.07.2017   Bulletin 2017/27**

(73) Titulaire: **Renault S.A.S.**
**92100 Boulogne-Billancourt (FR)**

(72) Inventeurs:
• **REYNIER, Yvan**
**F-38120 Saint-Egrève (FR)**
• **TARNOPOLSKIY, Vasily**
**F-38000 Grenoble (FR)**

(74) Mandataire: **Rougemont, Bernard et al**
**Renault s.a.s**
**Technocentre**
**Sce 00267 TCR GRA 2 36**
**1, Avenue du Golf**
**78288 Guyancourt (FR)**

(56) Documents cités:
**JP-A- 2008 021 556        JP-A- 2013 191 484
KR-A- 20130 116 805        KR-A- 20130 117 715
US-A1- 2010 261 057        US-A1- 2011 262 811
US-A1- 2014 080 003**

**Description**

L'invention concerne le domaine général des batteries rechargeables lithium-ion (Li-ion).

Plus précisément, l'invention concerne les batteries rechargeables Li-ion comprenant un matériau pour électrode positive à haute tension, dite spinelle haute tension, un collecteur de courant cathodique, un matériau pour électrode négative particulier et un collecteur de courant anodique.

L'invention concerne également un procédé de préparation de batteries lithium-ion comprenant de telles électrodes.

Les collecteurs de courant permettent d'assurer la connexion électrique et sont généralement des feuillards de métal.

Les batteries Li-ion sont de plus en plus utilisées comme source d'énergie autonome, en particulier dans les applications liées à la mobilité électrique. Cette tendance s'explique notamment par des densités d'énergie massique et volumique nettement supérieures à celles des accumulateurs classiques nickel cadmium (Ni-Cd) et nickel-hydrure métallique (Ni-MH), une absence d'effet mémoire, une auto-décharge faible par rapport à d'autres accumulateurs et également par une baisse des coûts au kilowatt-heure liée à cette technologie.

Dans cette logique de développement des batteries Li-ion, les matériaux pour électrode négative à base de titanate de lithium sont pressentis pour remplacer les matériaux à base de graphite, ou plus généralement de carbone, actuellement utilisés dans les électrodes négatives de batteries Li-ion. En effet, ces matériaux sont destinés à une nouvelle génération de batterie Li-ion en raison de l'abondance de dioxyde de titane en tant que matière première et de leurs excellentes propriétés de stabilité et de réversibilité liées au cyclage.

Néanmoins, les batteries comprenant une électrode positive à haute tension, dite spinelle haute tension, associée à une électrode négative comprenant du titanate de lithium, présentent aujourd'hui une faible durée de vie. Cette faible durée de vie est très probablement due à une instabilité liée à une incompatibilité entre l'électrolyte et l'électrode positive.

L'amélioration de la durée de vie d'une batterie Li-ion représente en effet un enjeu majeur à l'heure actuelle. Des solutions doivent être trouvées afin de résoudre cette problématique liée à l'instabilité.

Des technologies diverses ont été développées en lien avec l'enrobage d'électrodes permettant une optimisation de l'adhésion des électrodes aux collecteurs de courant. Ainsi, le document WO 2012/086447 divulgue un collecteur de courant particulier, à savoir une feuille constituée d'un alliage en aluminium. Cet alliage permet d'améliorer l'adhésion entre l'électrode et le collecteur de courant. La connexion électrique est de fait améliorée.

Par ailleurs, le document KR 2013 0116805 décrit une batterie Li-ion munie d'au moins une électrode comprenant un liant porteur du groupe -CN. Ladite électrode, qui peut être une anode ou une cathode, adhère au collecteur de courant selon une énergie d'adhésion selon une large gamme. Le document KR 2013 0117715 divulgue quant à lui une batterie Li-ion munie d'au moins une électrode comprenant un liant porteur d'un groupe polyoléfine.

En outre, le document JP 2013 191484 décrit un électrolyte pour batterie Li-ion munie d'une électrode négative à base de titanate de lithium, notamment de formule chimique $Li_4Ti_5O_{12}$. Le document JP 2008 021556 porte sur une batterie Li-ion munie d'une électrode négative à base de titanate de lithium, notamment de formule chimique $Li_4Ti_5O_{12}$.

Le document US 2014/080003 concerne un électrolyte non aqueux pour batterie lithium-ion comprenant une électrode négative constituée d'un matériau à base de titane, notamment $Li_4Ti_5O_{12}$. Le document US 2010/261057 décrit un électrolyte non aqueux pour batterie lithium-ion comprenant une électrode négative comprenant un matériau actif pour électrode négative, et une électrode positive.

Le document JP 2012 156 109 divulgue quant à lui une autre solution à ce problème technique. Ce document décrit une composition adhésive entre le matériau actif pour électrode et le collecteur de courant à base de graphite lamellaire.

Enfin, une autre approche a été envisagée en ajoutant un liant particulier, à savoir un agent de couplage silane, pendant le processus de préparation d'une électrode positive augmentant l'adhésion entre ladite électrode positive et le collecteur de courant, comme l'indique le document CN 101 399 332.

Les liants ont un effet sur les propriétés d'adhésion de l'électrode négative au collecteur de courant anodique selon leur nature et leur quantité. Une quantité trop importante de liant entraine une forte adhésion de l'électrode négative au collecteur de courant anodique, mais les performances électrochimiques de la cellule de batterie Li-ion chutent. Le matériau pour électrode négative à base de titanate de lithium a alors une activité fortement diminuée. En revanche, une quantité trop faible de liant entraine une faible adhésion conduisant à une délamination du matériau au cours des cycles de charge et de décharge, ce qui doit être évité pour une durée de vie d'une cellule de batterie Li-ion améliorée.

Il serait donc avantageux de fournir une cellule de batterie Li-ion comprenant des matériaux pour électrodes permettant à la fois d'améliorer la durée de vie de la batterie Li-ion et d'obtenir des performances électrochimiques stables au cours des cycles de charge et de décharge.

Une solution préconisée dans la présente invention est d'assurer une bonne adhésion de l'électrode négative au collecteur de courant anodique. En effet, une bonne adhésion d'une électrode à un collecteur de courant est requise pour maintenir l'intégrité des électrodes au cours des différents cycles de charge et de décharge, ce qui permet d'assurer une stabilité de la capacité de la batterie Li-ion. La durée de vie de la batterie Li-ion est de fait améliorée.

La demanderesse a découvert que les meilleures performances électrochimiques d'une cellule de batterie Li-ion étaient obtenues grâce à un matériau pour électrode négative, constitué de $Li_4Ti_5O_{12}$, d'un ou plusieurs liant(s) et d'un ou plusieurs additif(s), ladite électrode négative ayant une énergie d'adhésion par rapport au collecteur de courant anodique, mesurée par essai de pelage (180°), supérieure ou égale à 30 N/m.

L'invention a donc pour objet une cellule de batterie lithium-ion comprenant :

- un collecteur de courant anodique,
- une électrode négative constituée d'un matériau à base de $Li_4Ti_5O_{12}$, d'un ou plusieurs liant(s) et éventuellement d'un ou plusieurs additif(s), ladite électrode négative ayant une énergie d'adhésion par rapport au collecteur de courant anodique, mesurée par essai de pelage (180°), supérieure ou égale à 30 N/m, ledit matériau pour électrode négative présentant un ratio R, défini par la relation:

$$R = \frac{\left[BET(LTO) \times x(LTO) + 0{,}25 \times BET(additifs) \times y(additifs)\right]}{z(liant)}$$

dans laquelle :

- $BET(LTO)$ désigne la surface spécifique du $Li_4Ti_5O_{12}$ ($m^2/g$);
- $x(LTO)$ désigne le pourcentage massique en $Li_4Ti_5O_{12}$ par rapport au poids total du matériau pour électrode négative :
- $BET(additifs)$ désigne la surface spécifique du ou des additifs présents au sein du matériau pour électrode négative ($m^2/g$), les additifs étant des conducteurs électroniques :
- $y(additifs)$ désigne le pourcentage massique en additifs par rapoprt au poids total du matériau pour électrode négative ; et
- $z(liants)$ désigne le pourcentage massique en liants par rapport au poids total du matériau pour électrode négative, compris entre 140 et 190.

- une électrode positive à haute tension constituée d'un matériau à base de $LiNi_xMn_{2-x}O_4$, x étant compris entre 0,4 et 0,6,
- un collecteur de courant cathodique,
- un séparateur, et
- un électrolyte.

L'invention a également pour objet un procédé de préparation de cellule selon l'invention.

Un autre objet de l'invention est une batterie Li-ion comprenant une ou plusieurs cellule(s) selon l'invention.

Enfin, l'invention porte sur un procédé de fabrication de batterie Li-ion comprenant une ou plusieurs cellule(s) selon l'invention.

D'autres avantages et caractéristiques de l'invention apparaitront plus clairement à l'examen de la description détaillée et des dessins annexés sur lesquels :

- la figure 1 représente un graphe comparant les capacités de cellules de batteries Li-ion (pourcentage de la capacité obtenue à un régime de 0,1C) présentant différents types d'électrodes et différentes énergies d'adhésion utilisées pour la préparation des cellules, en fonction du nombre de cycle de charge et de décharge,
- la figure 2 représente un cliché de la surface d'un matériau pour électrode négative à base de $Li_4Ti_5O_{12}$ (LTO) en fin de vie qui a été utilisé dans une cellule comprenant un matériau à haute tension pour électrode positive à base de $LiNi_{0,4}Mn_{1,6}O_4$ (LNMO),
- la figure 3 représente également un cliché de la surface d'un matériau pour électrode négative à base de $Li_4Ti_5O_{12}$ (LTO) en fin de vie qui a été utilisé dans une cellule comprenant un matériau à moyenne tension pour électrode positive à base de $LiNi_{1/3}Mn_{1/3}Co_{1/3}O_2$ (NMC),
- la figure 4 représente un cliché de la surface d'un matériau pour électrode négative à base de $Li_4Ti_5O_{12}$ (LTO) adhérant au collecteur de courant selon une énergie d'adhésion élevée, en fin de vie qui a été utilisé dans une cellule comprenant un matériau à haute tension pour électrode positive à base de $LiNi_{0,4}Mn_{1,6}O_4$ (LNMO),
- la figure 5 représente un graphe illustrant la capacité de différentes cellules à un régime de 3C en fonction de l'énergie d'adhésion d'une électrode négative par rapport au collecteur de courant anodique,
- la figure 6 représente un graphe illustrant la capacité de différentes cellules à un régime de 3C en fonction du ratio R.

Dans la description de l'invention, le terme « à base de » est synonyme de « comprenant majoritairement ».

Il est par ailleurs précisé que les expressions « compris entre... et... » et « de... à... » utilisées dans la présente description doivent s'entendre comme incluant chacune des bornes mentionnées.

Une cellule de batterie Li-ion comprend généralement une électrode négative, un collecteur de courant anodique, une électrode positive, un collecteur de courant cathodique, un séparateur entre les électrodes et un électrolyte.

La mesure d'une énergie d'adhésion se traduit par la mesure de la force de pelage, exprimée en N/m et mesurée sur une électrode à température ambiante. La valeur donnée concerne l'interface électrode négative/collecteur de courant anodique la plus faible, là où il y a le plus grand risque de décollement. On effectue le pelage à l'interface en lui faisant subir une traction selon un angle de 180° et à une vitesse de 50mm/min.

Comme expliqué précédemment, la cellule de batterie Li-ion selon l'invention comprend une électrode négative constituée d'un matériau à base de $Li_4Ti_5O_{12}$ ayant une énergie d'adhésion par rapport au collecteur de courant anodique supérieure ou égale à 30 N/m.

De manière préférée, ladite énergie d'adhésion est comprise entre 30 et 50 N/m, de préférence entre 30 et 45 N/m.

*Electrode négative*

La cellule selon l'invention comprend une électrode négative constituée d'un matériau à base de $Li_4Ti_4O_{12}$ présentant un ratio R, défini par la relation telle que mentionnée ci-dessus.

$$R = \frac{[BET(LTO) \times x(LTO) + 0,25 \times BET(additifs) \times y(additifs)]}{z(liant)}$$

compris entre 140 et 190.

En effet, la quantité adéquate de liant à utiliser est avantageusement estimée grâce à ce ratio R. En dessous de 140, la quantité de liant présent semble être trop importante, conduisant à des performances électrochimiques faibles. Au-dessus de 190, l'adhésion semble être trop faible et le matériau pour électrode négative a tendance à se délaminer au cours des cycles de charge et de décharge.

Selon un mode de réalisation particulier, la cellule selon l'invention comprend une électrode négative constituée d'un matériau à base de $Li_4Ti_5O_{12}$ présentant un ratio compris entre 150 et 170.

Un conducteur électronique est un composant classique utilisé dans des formulations de matériaux pour électrode, notamment pour électrode négative. Du noir de carbone est un exemple de conducteur électronique. Par exemple, le noir de carbone de dénomination commerciale Super C65® vendu par la société TIMCAL peut être utilisé.

De manière préférée, l'électrode négative de la cellule selon l'invention comprend un ou plusieurs liant(s) qui sont choisis parmi les latex de polybutadiène-styrène et les polymères organiques, et de préférence parmi les latex de polybutadiène-styrène, les polyesters, les polyéthers, les dérivés polymère de méthylméthacrylate, les dérivés polymères d'acrylonitrile, la carboxyle méthyle cellulose (CMC) et ses dérivés, les polyvinyles acétates ou polyacrylate acétate, les polyfluorures de vinylidène (PVdF), et leurs mélanges.

De préférence, les liants sont la carboxyle méthyle cellulose (CMC) et le latex Zeon®, c'est-à-dire un copolymère styrène-butadiène carboxylé.

*Electrode positive*

Dans un autre mode de réalisation, l'électrode positive de la cellule selon l'invention comprend un ou plusieurs additif(s) qui peuvent être des fibres de carbone et/ou du noir de carbone.

Avantageusement, la cellule selon l'invention comporte une électrode positive à haute tension (> 4,5 V), dite spinelle haute tension, constituée d'un matériau à base de $LiNi_xMn_{2-x}O_4$, x étant compris entre 0,4 et 0,6, comprenant des fibres de carbone.

De préférence, ce sont des fibres de carbone à croissance en phase vapeur (VGCF pour « Vapor Grown Carbon Fibers ») commercialisées par la société Showa Denko. D'autres types de fibres de carbone appropriés peuvent être des nanotubes de carbone ou des fibres de carbone à base de brai mésophasique commercialisées par la société A&T Battery Corporation.

Avantageusement, le matériau pour électrode positive comprend un ou plusieurs liant(s) comme pour l'électrode négative.

Les liants décrits ci-dessus pour l'électrode négative peuvent être utilisés pour l'électrode positive.

De préférence, le liant est le polyfluorure de vinylidène (PVdF).

Selon un mode de réalisation particulier, la cellule selon l'invention comprend un séparateur localisé entre les électrodes. Il joue le rôle d'isolant électrique. Avantageusement, le séparateur est composé de polymères poreux, de préférence de polyéthylène et/ou de polypropylène.

Avantageusement, le séparateur utilisé est le séparateur Celgard® 2325, c'est-à-dire une membrane microporeuse tricouche d'une épaisseur de 25 $\mu$m composée de polypropylène et de polyéthylène.

Selon une autre caractéristique de l'invention, la cellule selon l'invention comprend un électrolyte, de préférence liquide.

De préférence, cet électrolyte comprend généralement un ou plusieurs sels de lithium et un ou plusieurs solvants.

Le sel de lithium le plus commun est un sel inorganique, à savoir l'hexafluorophosphate de lithium (LiPF$_6$). D'autres sels inorganiques sont appropriés et peuvent être choisis parmi LiClO$_4$, LiAsF$_6$, LiBF$_4$ ou LiI. Des sels organiques sont également appropriés et peuvent être choisis parmi le bis[(trifluorométhyl)sulfonyl]imide de lithium (LiN(CF$_3$SO$_2$)$_2$), le trifluorométhane sulfonate de lithium (LiCF$_3$SO$_3$), le bis(oxalato)borate de lithium (LiBOB), le fluoro(oxalato)borate de lithium (LiFOB), le difluoro(oxolato)borate de lithium (LiDFOB), le bis(perfluoroéthylsulfonyl)imide de lithium (LiN(CF$_3$CF$_2$SO$_2$)$_2$), LiCH$_3$SO$_3$, LiR$_F$SOSR$_F$, LiN(R$_F$SO$_2$)$_2$, LiC(R$_F$SO$_2$)$_3$, R$_F$ étant un groupement choisi parmi un atome de fluor et un groupement perfluoroalkyle comportant entre un et huit atomes de carbone.

Le ou les sels de lithium sont, de préférence, dissous dans un ou plusieurs solvants choisis parmi les solvants polaires aprotiques, par exemple, le carbonate d'éthylène (noté « EC »), le carbonate de propylène (noté « PC »), le carbonate de diméthyle (noté « DMC »), le carbonate de diéthyle (noté « DEC ») et le carbonate d'éthyle et de méthyle (noté « EMC »).

De préférence, l'électrolyte comprend 1M de l'hexafluorophosphate de lithium dissous dans un mélange de carbonate d'éthylène, de carbonate d'éthyle et de méthyle et de carbonate de diméthyle selon un ratio 1/1/1 en volume. Cet électrolyte est appelé LPX.

L'invention a également pour objet un procédé de préparation de cellule selon l'invention comprenant les étapes suivantes :

- empilement d'un collecteur de courant anodique, d'un matériau pour électrode négative tel que défini ci-dessus, d'un matériau pour électrode positive à haute tension, d'un collecteur de courant cathodique et d'un séparateur situé entre les deux électrodes, les deux collecteurs étant aux extrémités de la cellule,
- imprégnation du séparateur par un électrolyte.

De préférence, le matériau pour électrode positive comprend le matériau actif de formule LiNi$_{0,4}$Mn$_{1,6}$O$_4$ (LNMO).

De préférence, le séparateur est le séparateur Celgard® 2325, c'est-à-dire une membrane microporeuse tricouche d'une épaisseur de 25 $\mu$m composée de polypropylène et de polyéthylène.

Un autre objet de l'invention est une batterie Li-ion comprenant une ou plusieurs cellule(s) selon l'invention.

L'invention porte également sur un procédé de fabrication d'une batterie Li-ion par assemblage d'une ou plusieurs cellule(s) selon l'invention.

La présente invention est illustrée de manière non-limitative par les exemples suivants.

**Exemples**

I. Première série d'essais

1. Préparation des cellules

La cellule A (courbe A) est composée d'une électrode négative constituée de 92% en poids de Li$_4$Ti$_5$O$_{12}$, de 4% en poids de PVdF et de 4% en poids d'un additif carbone Super P®, d'un séparateur Celgard® 2325, d'un électrolyte LPX et d'une électrode positive à base de LiMn$_{1/3}$Ni$_{1/3}$Co$_{1/3}$O$_2$ (NMC). L'électrode négative adhère au collecteur de courant anodique selon une énergie d'adhésion de 4 N/m.

La cellule B (courbe B) est composée d'une électrode négative constituée de 92% en poids de Li$_4$Ti$_5$O$_{12}$, de 4% en poids de PVdF et de 4% en poids d'un additif carbone Super P®, d'un séparateur Celgard® 2325, d'un électrolyte LPX et d'une électrode positive à base de LiNi$_{0,4}$Mn$_{1,6}$O$_4$ (LNMO). L'électrode négative adhère au collecteur de courant anodique selon une énergie d'adhésion de 4 N/m.

La cellule C (courbe C) est composée d'une électrode négative constituée de 92% en poids de Li$_4$Ti$_5$O$_{12}$, de 1% en poids de carboxyle méthyle cellulose (CMC), de 2,76% en poids de latex Zeon® (SBR de type BM400) et de 4,24% en poids d'un additif carbone Super P®, d'un séparateur Celgard® 2325, d'un électrolyte LPX et d'une électrode positive à base de LiNi$_{0,4}$Mn$_{1,6}$O$_4$ (LNMO). L'électrode négative adhère au collecteur de courant anodique selon une énergie d'adhésion de 33 N/m.

La composition des cellules est indiquée dans le tableau 1 :

**Tableau 1**

| Cellule | A (comp.) | B (comp.) | C (inv.) |
|---|---|---|---|
| Électrode négative | LTO | LTO | LTO |
| Energie d'adhésion de l'électrode négative (N/m) | 4 | 4 | 33 |
| Électrode positive | NMC | LNMO | LNMO |

2. Evaluation et résultats des cellules

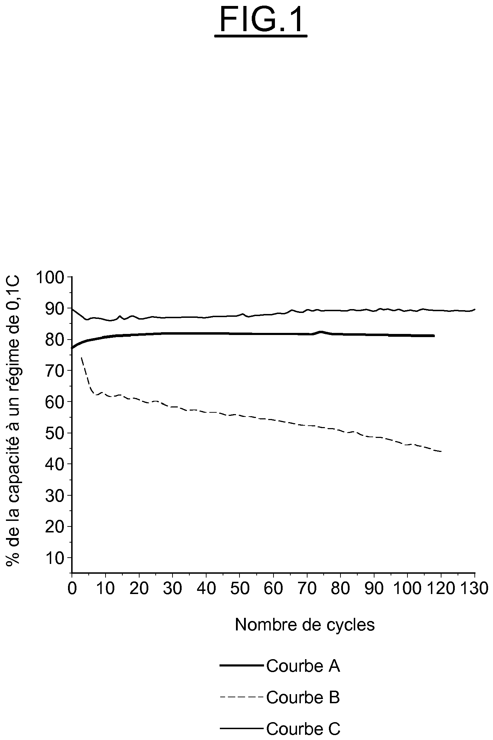

La figure 1 représente un graphe comparant les capacités de cellules de batteries Li-ion (pourcentage des capacités obtenues à un régime de 0,1C) présentant différents types d'électrodes et différentes énergies d'adhésion utilisées pour la préparation des cellules, en fonction du nombre de cycle de charge et de décharge. Les capacités de trois cellules ont été mesurées.

*2.1 Méthode*

Un procédé de cyclage a été utilisé. Le premier cycle, ou cycle d'activation, s'est déroulé entre 3,35 et 2 V à un régime de C/10. Les cycles de charge et de décharge suivants se sont déroulés à des tensions réduites comprises entre 3,35 et 2,5 V à un régime de 1C.

*2.2 Evolution de la capacité de cellules de batterie en fonction du nombre de cycles*

Les capacités testées figurent dans le tableau 2 :

**Tableau 2**

| Cellule | A (comp.) | B (comp.) | C (inv.) |
|---|---|---|---|
| Nombre de cycles | 110 | 110 | 120 |
| Capacité (% de la capacité à 0.1C) | 80 | 45 | 90 |

La figure 1 montre que la cellule A comparative présente un comportement électrochimique classique. Le matériau pour électrode positive à basse tension (NMC) est un matériau standard et l'énergie d'adhésion utilisée de 4 N/m est classique.

Lorsque le matériau pour électrode positive à basse tension (NMC) est remplacé par un matériau pour électrode positive à haute tension (LNMO) au sein d'une cellule de batterie, tout en conservant les autres paramètres identiques, comme c'est le cas de la cellule B, la figure 1 montre clairement que cette cellule B (courbe B) présente un comportement électrochimique très instable. Une chute des performances électrochimiques est observée et une capacité d'environ 45% de la capacité à un régime de 0,1C est mesurée après environ 110 cycles. La cellule B correspond à la cellule référence comprenant un matériau pour électrode positive à haute tension.

Lorsque l'énergie d'adhésion est augmentée de 4 à 33 N/m, en conservant la même nature de matériau pour électrode positive, comme c'est le cas pour la cellule C, une bonne durabilité et de bonnes performances sont obtenues. Ces performances sont meilleures que celles de la cellule A et bien meilleures comparées à celles obtenues par la cellule B.

*2.3 Comportement électrochimique des cellules et évaluation visuelle des électrodes*

Comme mentionné précédemment, la cellule A correspond à la cellule comparative et présente des résultats électrochimiques standards.

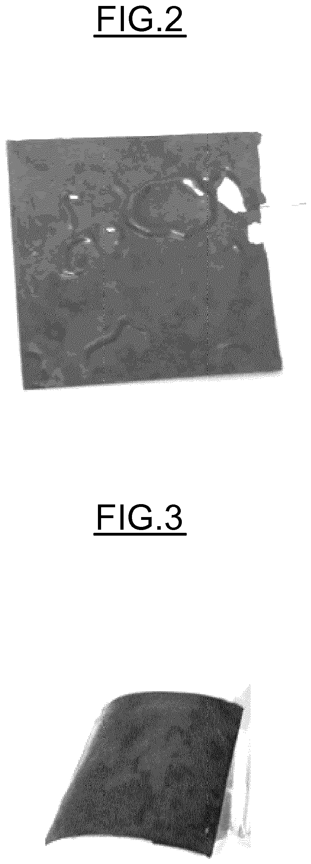

2.3.1 Figure 2

Dans la cellule B, le matériau pour électrode positive à base de $LiMn_{1/3}Ni_{1/3}Co_{1/3}O_2$ (NMC) a été remplacé par le matériau pour électrode positive à haute tension, dite spinelle haute tension, à base de $LiNi_{0,4}Mn_{1,6}O_4$ (LNMO). L'énergie d'adhésion de l'électrode négative au collecteur de courant anodique de 4 N/m reste la même.

Un comportement électrochimique fortement instable a été observé. Cette chute des performances peut être corrélée à la formation intensive de gaz à la surface des électrodes qui se déroule lors du cycle d'activation. Le gaz serait formé à l'intérieur des pores de l'électrode négative entrainant la délamination de l'électrode négative.

En effet, la figure 2 montre que des bulles sont observées à la surface de l'électrode négative en question.

Un mécanisme est proposé pour expliquer ce comportement. Une réaction d'oxydation de l'électrolyte a lieu à l'électrode positive lors du cycle d'activation. Les produits de cette réaction sont diffusés jusqu'à l'électrode négative grâce à l'électrolyte. En outre, des réactions d'oxydation parasites ont également lieu à l'électrode positive pour former des produits gazeux qui sont également transportés jusqu'à la surface de l'électrode négative. Ces contaminations attaquent la surface de l'électrode négative et sont à l'origine de la formation en quantité importante de gaz à l'intérieur des pores de l'électrode négative. L'électrode négative se détache alors du collecteur de courant anodique et, en l'absence d'une forte énergie d'adhésion, la cellule n'est plus en état de fonctionner.

Afin de faire face à ce problème de formation de gaz en quantité trop importante, une cellule a été testée en augmentant l'énergie d'adhésion de 4 N/m à 33 N/m entre l'électrode négative et le collecteur de courant anodique.

De bonnes performances électrochimiques sont obtenues et sont stables au cours des cycles de charge et de décharge.

2.3.2 Figure 3

La cellule C montre de très bons résultats électrochimiques aussi bien en termes de performance que de durabilité.

Les performances électrochimiques de la cellule B comprenant un matériau pour électrode positive à haute tension sont moins bonnes et peuvent être expliquées par l'adhésion faible du matériau pour électrode négative à base de LTO qui se délamine sous l'action du gaz formé à sa surface.

Lorsqu'un matériau pour électrode positive standard à base de NMC est utilisé, le dégazage n'a pas lieu à la surface du matériau à base de LTO.

En effet, comme le montre la figure 3, la surface du matériau à base de LTO n'est pas endommagée et le système fonctionne malgré la faible adhésion du matériau pour électrode négative.

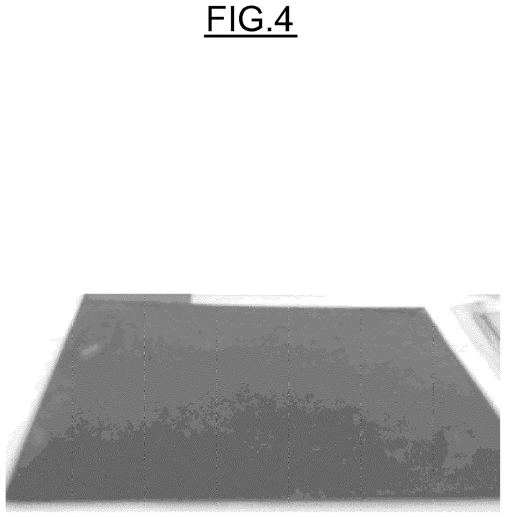

2.3.3 Figure 4

La figure 4 montre que lorsqu'un matériau pour électrode positive à base de LNMO de type spinelle haute tension, est associé à un matériau pour électrode négative à base de LTO adhérant au collecteur de courant anodique selon une énergie d'adhésion élevée, les problèmes liés au dégazage mentionnés précédemment n'apparaissent plus, la surface du matériau à base de LTO n'étant pas endommagée.

Ainsi, dans le cas où une cellule comprend un matériau pour électrode positive à haute tension (LNMO), l'énergie d'adhésion entre le matériau pour électrode négative et le collecteur de courant anodique est primordiale et doit être supérieure ou égale à 30 N/m afin d'obtenir de bonnes durabilités.

II. Deuxième série d'essais

1. Préparation des cellules

*1.1 Préparation de l'électrode nélative 2 comparative et de l'électrode négative 3 selon l'invention*

Un matériau actif composé de $Li_4Ti_5O_{12}$ est utilisé. L'électrode négative 3 est fabriquée en mélangeant 92% en poids de $Li_4Ti_5O_{12}$, 4,24% en poids de noir de carbone de type C45, 1% en poids de carboxyle méthyle cellulose (CMC) et 2,76% en poids de latex Zeon® (SBR de type BM400), c'est-à-dire un copolymère styrène-butadiène carboxylé. L'électrode négative 3 est donc identique à l'électrode négative utilisée dans la cellule C.

Le mélange résultant est déposé sur une feuille de cuivre de 15 $\mu$m d'épaisseur, puis séché et compressé par calandrage dans un environnement sec. L'électrode ainsi fabriquée présente une porosité de 43%. Un ratio R de 163 a été déterminé.

L'électrode négative 2 est composée de 93% en poids de $Li_4Ti_5O_{12}$, de 2% en poids de noir de carbone de type C45, de 1,5% en poids de carboxyle méthyle cellulose (CMC) et de 3,5% en poids de latex Zeon® (SBR de type BM400). Un ratio R de 119 a été déterminé.

*1.2 Préparation de l'électrode négative comparative 1*

L'électrode négative 1 est composée de 93,9% en poids de $Li_4Ti_5O_{12}$, de 2% en poids de noir de carbone de type C45, de 1,92% en poids de carboxyle méthyle cellulose (CMC) et de 2,15% en poids de latex Zeon® (SBR de type BM400), c'est-à-dire un copolymère styrène-butadiène carboxylé. Un ratio R de 196 a été déterminé.

### 1.3 Mesure de l'énergie d'adhésion

L'énergie d'adhésion est mesurée sur un échantillon de matériau pour électrode, selon la méthode décrite ci-avant, avant la mise en place dans une cellule. Les résultats sont reportés dans le tableau 3.

Les compositions des électrodes négatives 1 à 3, leur ratio R et leur énergie d'adhésion sont reportés dans le tableau 3 ci-dessous.

**Tableau 3**

| Composition de l'électrode négative | 1 (comp.) | 2 (comp.) | 3 (inv.) |
|---|---|---|---|
| $Li_4Ti_5O_{12}$ (% massique) | 93,9 | 93 | 92 |
| Noir de carbone C45 (% massique) | 2 | 2 | 4,24 |
| CMC (% massique) | 1,92 | 1,5 | 1 |
| SBR BM400 (% massique) | 2,15 | 3,5 | 2,76 |
| Ratio R | 196 | 119 | 163 |
| Energie d'adhésion (N/m) | 8,47 | 55,43 | 32,64 |

### 1.4 Préparation des électrodes positives

Un matériau actif pour électrode positive de formule $LiNi_{0,4}Mn_{1,6}O_4$ a été utilisé. Les électrodes sont préparées en mélangeant 90% en poids de matériau actif, 5% en poids d'un additif carbone Super P® et 5% en poids de polyfluorure de vinylidène (PVdF) dissous dans du N-méthyl-2-pyrrolidone (NMP).

Les électrodes sont fabriquées en déposant le mélange sur une feuille d'aluminium de 15 $\mu$m d'épaisseur. Les électrodes sont séchées et compressées par calandrage dans un environnement sec de telle sorte qu'elles présentent une porosité de 35%.

### 1.5 Séparateur et électrolyte

Le séparateur Celgard® 2325 est utilisé afin d'éviter tout court-circuit entre l'électrode positive et l'électrode négative durant les cycles de charge et de décharge. L'aire de ce séparateur est de 16 cm². Le séparateur Celgard® 2325 est une membrane microporeuse tricouche d'une épaisseur de 25 $\mu$m composée de polypropylène et de polyéthylène.

L'électrolyte (LPX) utilisé comprend 1M de $LiPF_6$ dissous dans un mélange de carbonate d'éthylène, de carbonate d'éthyle et de méthyle et de carbonate de diméthyle selon un ratio 1/1/1 en volume.

### 1.6 Assemblage des cellules 1 à 3

A partir de ces électrodes négatives, des cellules sont préparées. Pour chacune d'entre elles, la même électrode positive, le même séparateur, le même électrolyte et les mêmes collecteurs de courant ont été utilisés.

2. Evaluation et résultats des cellules

### Mesure de la capacité

Les capacités de ces cellules à un régime de 3C sont spécifiées dans le tableau 4. Les cellules 1, 2 et 3 contiennent respectivement les électrodes négatives 1, 2 et 3. Les résultats sont reportés dans le tableau 4.

**Tableau 4**

| Cellule | 1 (comp.) | 2 (comp.) | 3 (inv.) |
|---|---|---|---|
| Energie d'adhésion (N/m) | 8,47 | 55,43 | 32,64 |
| Ratio R | 196 | 119 | 163 |

(suite)

| Cellule | 1 (comp.) | 2 (comp.) | 3 (inv.) |
|---|---|---|---|
| Capacité (mAh/g) | 107 | 113 | 143 |
| Durabilité | faible | élevée | élevée |

Les résultats apparaissant dans le tableau 4 montrent une nouvelle fois que l'énergie d'adhésion est une caractéristique primordiale puisque la cellule 3 présente des performances électrochimiques élevées en termes de durabilité tandis que la durabilité de la cellule 1 est faible.

De plus, grâce à un ratio R adapté, la cellule 3 présente des performances électrochimiques particulièrement très bonnes puisqu'une capacité de seulement 107 mAh/g (69% de la capacité à un régime de 3C) a été mesurée pour la cellule 1 contre 143 mAh/g (92% de la capacité à un régime de 3C) pour la cellule 3.

Par ailleurs, la cellule 2 présente une capacité supérieure à celle obtenue pour la cellule 1 comparative. En effet, une capacité de 113 mAh/g a été mesurée pour la cellule 2.

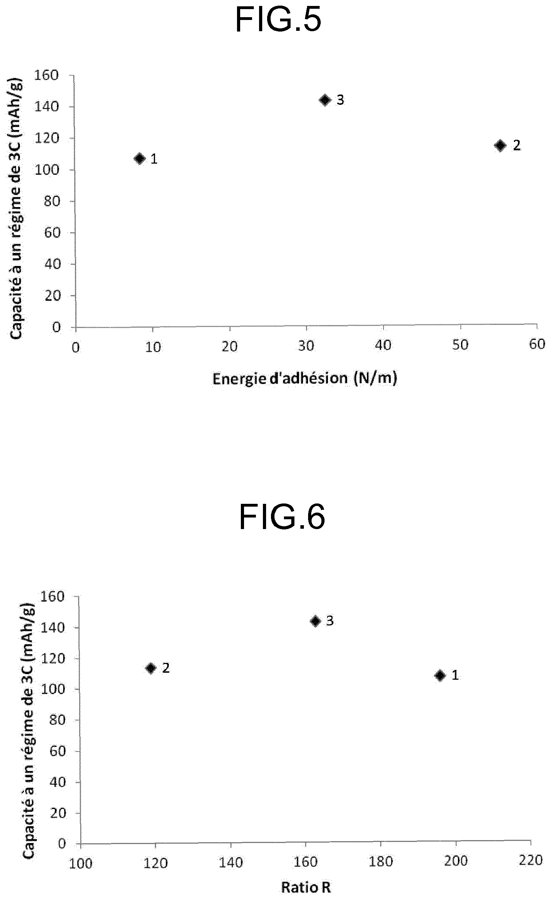

Les graphes des figures 5 et 6 résument les résultats obtenus ci-avant. Plus particulièrement, la figure 5 montre clairement l'importance de l'adhésion de l'électrode négative au collecteur de courant anodique selon une énergie d'adhésion particulière, lors de l'utilisation d'un matériau pour électrode positive à haute tension, dite spinelle haute tension, associé à un matériau pour électrode négative à base de LTO.

## Revendications

1. Cellule de batterie lithium-ion comprenant :

   - un collecteur de courant anodique,
   - une électrode négative constituée d'un matériau à base de $Li_4Ti_5O_{12}$, d'un ou plusieurs liant(s) et éventuellement d'un ou plusieurs additifs,
   - une électrode positive à haute tension constituée d'un matériau à base de $LiNi_xMn_{2-x}O_4$, x étant compris entre 0,4 et 0,6,
   - un collecteur de courant cathodique,
   - un séparateur, et
   - un électrolyte,

   **caractérisé en ce que** ladite électrode négative a une énergie d'adhésion par rapport au collecteur de courant anodique, mesurée par essai de pelage, en effectuant le pelage à l'interface électrode négative/collecteur de courant anodique en lui faisant subir une traction selon un angle de 180° et à vitesse de 50 mm/min, supérieure ou égale à 30 N/m, et ledit matériau pour électrode négative présentant un ratio R, défini par la relation :

   $$R = \frac{\left[ BET(LTO) \times x(LTO) + 0{,}25 \times BET(additifs) \times y(additifs) \right]}{z(liant)}$$

   dans laquelle :

   - BET(LTO) désigne la surface spécifique du $Li_4Ti_5O_{12}$ (m²/g) ;
   - x(LTO) désigne le pourcentage massique en $Li_4Ti_5O_{12}$ par rapport au poids total du matériau pour électrode négative ;
   - BET(additifs) désigne la surface spécifique du ou des additifs présents au sein du matériau pour électrode négative (m²/g), les additifs étant des conducteurs électroniques ;
   - y(additifs) désigne le pourcentage massique en additifs par rapport au poids total du matériau pour électrode négative ; et
   - z(liants) désigne le pourcentage massique en liants par rapport au poids total du matériau pour électrode négative,

   compris entre 140 et 190.

**2.** Cellule selon la revendication 1, **caractérisée en ce que** ladite énergie d'adhésion est comprise entre 30 et 50 N/m.

**3.** Cellule selon la revendication 1 ou 2, **caractérisée en ce que** ledit matériau pour électrode négative présente un ratio R compris entre 150 et 170.

**4.** Cellule selon l'une quelconque des revendications précédentes, **caractérisée en ce que** le ou lesdits liant(s) de l'électrode négative sont choisis parmi les latex de polybutadiène-styrène et les polymères organiques, et de préférence parmi les latex de polybutadiène-styrène, les polyesters, les polyéthers, les dérivés polymère de méthylméthacrylate, les dérivés polymères d'acrylonitrile, la carboxyle méthyle cellulose et ses dérivés, les polyvinyles acétates ou polyacrylate acétate, les polymères de fluorure de vinylidène, et leurs mélanges.

**5.** Cellule selon l'une quelconque des revendications précédentes, **caractérisée en ce que** ledit matériau pour électrode positive comprend des fibres de carbone et/ou du noir de carbone.

**6.** Cellule selon la revendication 5, **caractérisée en ce que** les fibres de carbone sont des fibres de carbone à croissance en phase vapeur (VGCF).

**7.** Cellule selon l'une quelconque des revendications précédentes, **caractérisée en ce que** ledit matériau pour électrode positive comprend un ou plusieurs liant(s).

**8.** Cellule selon l'une quelconque des revendications précédentes, **caractérisée en ce que** ledit séparateur est composé de polymères poreux, de préférence de polyéthylène et/ou de polypropylène.

**9.** Cellule selon l'une quelconque des revendications précédentes, **caractérisée en ce que** ledit électrolyte comprend un ou plusieurs sels de lithium.

**10.** Cellule selon la revendication 9, **caractérisée en ce que** ledit ou lesdits plusieurs sels de lithium sont choisis parmi le lithium bis[(trifluorométhyl)sulfonyl]imide ($LiN(CF_3SO_2)_2$), le lithium trifluorométhane sulfonate ($LiCF_3SO_3$), le lithium bis(oxalato)borate (LiBOB), le fluoro(oxolato)borate de lithium (LiFOB), le difluoro(oxolato)borate de lithium (LiDFOB), le lithium bis(perfluoroéthylsulfonyl)imide ($LiN(CF_3CF_2SO_2)_2$), $LiClO_4$, $LiAsF_6$, $LiPF_6$, $LiBF_4$, LiI, $LiCH_3SO_3$, $LiR_FSOSR_F$, $LiN(R_FSO_2)_2$, $LiC(R_FSO_2)_3$, $R_F$ étant un groupement choisi parmi un atome de fluor et un groupement perfluoroalkyle comportant entre un et huit atomes de carbone.

**11.** Procédé de préparation d'une cellule de batterie Li-ion telle que définie à l'une quelconque des revendications précédentes, **caractérisé en ce que** ledit procédé comprend les étapes suivantes :

- empilement d'un collecteur de courant anodique, d'un matériau pour électrode négative, d'un matériau pour électrode positive à haute tension, d'un collecteur de courant cathodique et d'un séparateur situé entre les deux électrodes, les deux collecteurs étant aux extrémités de la cellule,
- imprégnation du séparateur par un électrolyte.

**12.** Batterie Li-ion, **caractérisée en ce qu'**elle comprend une ou plusieurs cellule(s) telle(s) que définie(s) à l'une quelconque des revendications 1 à 10.

**13.** Procédé de fabrication de batterie Li-ion telle que définie à la revendication 12, **caractérisé en ce que** ledit procédé comprend une étape d'assemblage d'une ou plusieurs cellule(s) telle(s) que définie(s) à l'une quelconque des revendications 1 à 10.

**Patentansprüche**

**1.** Lithium-Ionen-Batteriezelle, umfassend:

- einen Anodenstromkollektor,
- eine Negativelektrode, die aus einem Material auf Basis von $Li_4Ti_5O_{12}$, aus einem oder mehreren Bindemittel(n) und gegebenenfalls aus einem oder mehreren Additiven besteht,
- eine Positivelektrode mit hoher Spannung, die aus einem Material auf Basis von $LiNi_xMn_{2-x}O_4$ besteht, wobei x zwischen 0,4 und 0,6 liegt,

- einen Kathodenstromkollektor,
- einen Separator und
- einen Elektrolyten,

**dadurch gekennzeichnet, dass** die Negativelektrode eine Haftenergie in Bezug auf den Anodenstromkollektor, gemessen durch einen Schälversuch, indem das Schälen an der Grenzfläche von Negativelektrode/Anodenstromkollektor bewirkt wird, indem er einem Zug unter einem Winkel von 180° und einer Geschwindigkeit von 50 mm/min ausgesetzt wird, größer oder gleich 30 N/m aufweist, und das Material für die Negativelektrode ein Verhältnis R aufweist, das definiert wird durch die Beziehung:

$$R = \frac{[BET(LTO) \times x(LTO) + 0{,}25 \times BET(Additive) \times y(Additive)]}{z(Bindemittel)}$$

wobei:

- BET(LTO) die spezifische Oberfläche von $Li_4Ti_5O_{12}$ ($m^2$/g) bezeichnet;
- x (LTO) den Massenprozentsatz von $Li_4Ti_5O_{12}$ in Bezug auf das Gesamtgewicht des Materials für die Negativelektrode bezeichnet;
- BET(Additive) die spezifische Oberfläche des oder der Additive bezeichnet, die im Inneren des Materials für die Negativelektrode vorhanden sind ($m^2$/g), wobei die Additive elektronische Leiter sind;
- y(Additive) den Massenprozentsatz von Additiven in Bezug auf das Gesamtgewicht des Materials für die Negativelektrode bezeichnet; und
- z(Bindemittel) den Massenprozentsatz von Bindemitteln in Bezug auf das Gesamtgewicht des Materials für die Negativelektrode bezeichnet,

zwischen 140 und 190.

2. Zelle nach Anspruch 1,
**dadurch gekennzeichnet, dass** die Haftenergie zwischen 30 und 50 N/m liegt.

3. Zelle nach Anspruch 1 oder 2,
**dadurch gekennzeichnet, dass** das Material für die Negativelektrode ein Verhältnis R zwischen 150 und 170 aufweist.

4. Zelle nach einem der vorhergehenden Ansprüche,
**dadurch gekennzeichnet, dass** das oder die Bindemittel der Negativelektrode ausgewählt sind aus Latizes von Polybutadien-Styrol und organischen Polymeren, und vorzugsweise aus Latizes von Polybutadien-Styrol, Polyestern, Polyethern, Polymerderivaten von Methylmethacrylat, Polymerderivaten von Acrylonitril, Carboxylmethylcellulose und ihren Derivaten, Polyvinylacetaten oder Polyacrylatacetat, Polymeren von Vinylidenfluorid und ihren Mischungen.

5. Zelle nach einem der vorhergehenden Ansprüche,
**dadurch gekennzeichnet, dass** das Material für die Positivelektrode Kohlefasern und/oder Ruß umfasst.

6. Zelle nach Anspruch 5,
**dadurch gekennzeichnet, dass** die Kohlefasern Kohlefasern mit einem Wachstum in der Dampfphase (VGCF) sind.

7. Zelle nach einem der vorhergehenden Ansprüche,
**dadurch gekennzeichnet, dass** das Material für die Positivelektrode ein oder mehrere Bindemittel umfasst.

8. Zelle nach einem der vorhergehenden Ansprüche, **dadurch gekennzeichnet, dass** der Separator aus porösen Polymeren, vorzugsweise Polyethylen und/oder Polypropylen, besteht.

9. Zelle nach einem der vorhergehenden Ansprüche,
**dadurch gekennzeichnet, dass** der Elektrolyt ein oder mehrere Lithiumsalze umfasst.

10. Zelle nach Anspruch 9,

**dadurch gekennzeichnet, dass** das oder die mehreren Lithiumsalze ausgewählt sind aus Lithiumbis[(trifluorme-thyl)-sulfonyl]-imid (LiN(CF$_3$SO$_2$)$_2$), Lithiumtrifluormethansulfonat (LiCF$_3$SO$_3$), Lithium-bis(oxalato)-borat (LiBOB), Lithiumfluor-(oxolato)-borat (LiFOB), Lithiumdifluor-(oxolato)-borat (LiDFOB), Lithiumbis(perfluorethylsulfonyl)-imid (LiN(CF$_3$CF$_2$SO$_2$)$_2$), LiClO$_4$, LiAsF$_6$, LiPF$_6$, LiBF$_4$, LiI, LiCH$_3$SO$_3$, LiR$_F$SOSR$_F$, LiN(R$_F$SO$_2$)$_2$, LiC(R$_F$SO$_2$)$_3$, wobei R$_F$ eine Gruppe ist, die aus einem Fluoratom und einer Perfluoralkylgruppe ausgewählt ist, umfassend zwischen einem und acht Kohlenstoffatomen.

11. Verfahren zur Herstellung einer Li-Ionen-Batterie, wie in einem der vorhergehenden Ansprüche definiert, **dadurch gekennzeichnet, dass** das Verfahren die folgenden Schritte umfasst:

- Stapeln eines Anodenstromkollektors, eines Materials für eine Negativelektrode, eines Materials für eine Positivelektrode mit hoher Spannung, eines Kathodenstromkollektors und eines Separators, der zwischen den beiden Elektroden angeordnet ist, wobei sich die beiden Kollektoren an den Enden der Zelle befinden,
- Imprägnieren des Separators mit einem Elektrolyten.

12. Li-Ionen-Batterie, **dadurch gekennzeichnet, dass** sie eine oder mehrere Zelle(n) umfasst, wie in einem der Ansprüche 1 bis 10 definiert.

13. Verfahren zur Herstellung einer Li-Ionen-Batterie, wie in Anspruch 12 definiert, **dadurch gekennzeichnet, dass** das Verfahren einen Schritt des Assemblierens einer oder mehrerer Zelle(n), wie in einem der Ansprüche 1 bis 10 definiert, umfasst.

**Claims**

1. Lithium-ion battery cell comprising:

- an anode current collector,
- a negative electrode consisting of an Li$_4$Ti$_5$O$_{12}$-based material, of one or more binder(s) and optionally of one or more additives,
- a high-voltage positive electrode consisting of an LiNi$_x$Mn$_{2-x}$O$_4$-based material, x being between 0.4 and 0.6,
- a cathode current collector,
- a separator, and
- an electrolyte,

**characterized in that** said negative electrode has a bonding energy with respect to the anode current collector, measured by the peel test, by performing the peeling at the negative electrode/anode current collector interface by subjecting it to a tensile force according to an angle of 180° and at a rate of 50 mm/min, greater than or equal to 30 N/m, and said negative-electrode material having a ratio R, defined by the relationship:

$$R = \frac{\left[BET(LTO) \times x(LTO) + 0.25 \times BET(additives) \times y(additives)\right]}{z(binder)}$$

in which:

- BET(LTO) denotes the specific surface area of the Li$_4$Ti$_5$O$_{12}$ (m$^2$/g) ;
- x(LTO) denotes the weight percentage of Li$_4$Ti$_5$O$_{12}$ relative to the total weight of the negative-electrode material;
- BET(additives) denotes the specific surface area of the additive(s) present within the negative-electrode material (m$^2$/g), the additives being electron conductors;
- y (additives) denotes the weight percentage of additives relative to the total weight of the negative-electrode material; and
- z(binders) denotes the weight percentage of binders relative to the total weight of the negative-electrode material,

of between 140 and 190.

2. Cell according to Claim 1, **characterized in that** said bonding energy is between 30 and 50 N/m.

3. Cell according to Claim 1 or 2, **characterized in that** said negative-electrode material has a ratio R between 150 and 170.

4. Cell according to any one of the preceding claims, **characterized in that** said binder(s) of the negative electrode is/are chosen from polybutadiene-styrene latexes and organic polymers, and preferably from polybutadiene-styrene latexes, polyesters, polyethers, methyl methacrylate polymer derivatives, acrylonitrile polymer derivatives, carboxymethylcellulose, and its derivatives, polyvinylacetates or polyacrylate acetate, vinylidene fluoride polymers, and mixtures thereof.

5. Cell according to any one of the preceding claims, **characterized in that** said positive-electrode material comprises carbon fibres and/or carbon black.

6. Cell according to Claim 5, **characterized in that** the carbon fibres are vapour-grown carbon fibres (VGCFs) .

7. Cell according to any one of the preceding claims, **characterized in that** said positive-electrode material comprises one or more binder(s).

8. Cell according to any one of the preceding claims, **characterized in that** said separator is composed of porous polymers, preferably of polyethylene and/or polypropylene.

9. Cell according to any one of the preceding claims, **characterized in that** said electrolyte comprises one or more lithium salts.

10. Cell according to Claim 9, **characterized in that** said lithium salt or said several lithium salts is/are chosen from lithium bis[(trifluoromethyl)sulphonyl]imide ($LiN(CF_3SO_2)_2$), lithium trifluoromethanesulphonate ($LiCF_3SO_3$), lithium bis(oxalato)borate (LiBOB), lithium fluoro(oxalato)borate (LiFOB), lithium difluoro(oxalato)borate (LiDFOB), lithium bis(perfluoroethylsulphonyl) imide ($LiN(CF_3CF_2SO_2)_2$), $LiClO_4$, $LiAsF_6$, $LiPF_6$, $LiBF_4$, Lil, $LiCH_3SO_3$, $LiR_FSOSR_F$, $LiN(R_FSO_2)_2$, $LiC(R_FSO_2)_3$, RF being a group chosen from a fluorine atom or a perfluoroalkyl group comprising between one and eight carbon atoms.

11. Method for preparing a Li-ion battery cell as defined in any one of the preceding claims, **characterized in that** said method comprises the following steps:

   - stacking an anode current collector, a negative-electrode material, a high-voltage positive-electrode material, a cathode current collector and a separator located between the two electrodes, the two collectors being at the ends of the cell,
   - impregnating the separator with an electrolyte.

12. Li-ion battery, **characterized in that** it comprises one or more cell(s) as defined in any one of Claims 1 to 10.

13. Method for manufacturing a Li-ion battery as defined in Claim 12, **characterized in that** said method comprises a step of assembling one or more cell(s) as defined in any one of Claims 1 to 10.

# FIG.1

Nombre de cycles

———— Courbe A
- - - - Courbe B
———— Courbe C

# FIG.2

# FIG.3

# FIG.4

# FIG.5

# FIG.6

## RÉFÉRENCES CITÉES DANS LA DESCRIPTION

**Documents brevets cités dans la description**

- WO 2012086447 A
- KR 20130116805
- KR 20130117715
- JP 2013191484 A
- JP 2008021556 A
- US 2014080003 A
- US 2010261057 A
- JP 2012156109 B
- CN 101399332